# EUROPÄISCHE PATENTANMELDUNG

(11) **EP 0 641 751 A2**
(43) Veröffentlichungstag der Anmeldung: **08.03.1995**
(21) Anmeldenummer: 94113186.4
(22) Anmeldetag: 24.08.1994
(51) Int. Cl.: C04B 37/00, H01M 6/20

(54) **Verfahren zum Verbinden der Stirnflächen zweier Keramikteile**

(30) Priorität: 04.09.1993 DE 4329933
(71) Anmelder: Licentia Patent-Verwaltungs-GmbH, D-60596 Frankfurt (DE)
(72) Erfinder: Strauss, Hans-Jürgen, D-89134 Blaustein (DE); Schneider, Ulrich, D-89134 Blaustein (DE); Haubner, Manfred, D-89269 Vöhringen (DE); Theiss, Josef, D-89075 Ulm (DE)
(74) Vertreter: Wolf, Otto, Dr. Ing.

(57) **Zusammenfassung**

Es wird ein Verfahren zum vakuumdichten Anglasen eines β-Al₂O₃-Keramikteils (2) mit einem α-Al₂O₃-Keramikteil (1) angegeben, bei dem das Verbindungsglas (3) in Pulverform mittels einer Haftflüssigkeit auf dem β-Al₂O₃-Keramikteil (2) angebracht wird und dann die Anglasung bei erhöhten Temperaturen vorgenommen wird.

## Beschreibung

Die vorliegende Erfindung betrifft ein Verfahren nach dem Oberbegriff des Patentanspruches 1.

Ein Verfahren zum vakuumdichten Verbinden einer α-Aluminiumoxyd-Keramik mit einer β-Aluminiumoxyd-Keramik ist z.B. aus der GB 2 190 236 A bekannt.

Je nach Bauart der Batteriezelle müssen derartige Anglasungen vakuumdicht sein. Wegen der hohen Betriebstemperaturen von etwa 300^{o}C werden an solche Glasverbindungen hohe Anforderungen gestellt.

Der vorliegenden Erfindung liegt die Aufgabe zugrunde, ein Verfahren der eingangs genannten Art anzugeben, das bei einfacher Handhabung zu Anglasungen hoher Vakuumfestigkeit und Stoßfestigkeit für Hochtemperaturbatterien führt.

Diese Aufgabe wird durch die im Kennzeichen des Patentanspruches 1 angegebenen Merkmale gelöst.

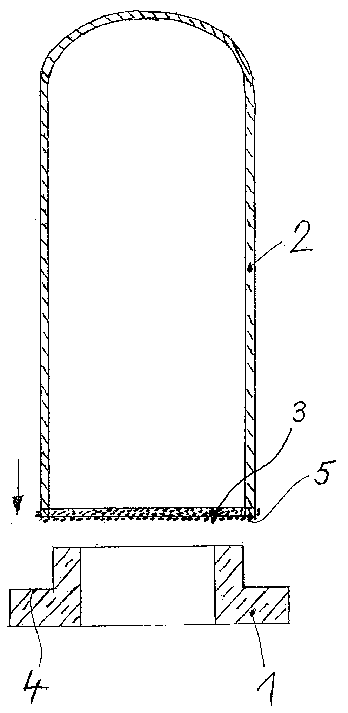

Von großem Vorteil ist die einfache und preisgünstige Durchführbarkeit des beschriebenen Verfahrens. Die erzielten Anglasungen zeigen eine hohe Zuverlässigkeit offenbar nicht zuletzt wegen hoher Blasenfreiheit in der Anglasungszone. Anhand des in der Figur schematisch im Querschnitt dargestellten Ausführungsbeispiels wird die Erfindung nachfolgend näher erläutert.

Mit 2 ist ein auf einer Seite geschlossenes Rohr aus β-Aluminiumoxyd-Keramik bezeichnet, das einen Festelektrolyten einer z.B. auf Natrium-Nickelchloridbasis arbeitenden Hochtemperaturbatterie darstellt. Das offene Ende soll vakuumdicht und wenigstens bis etwa 400^{o}C temperaturfest mit einem Zwischenring 1 aus α-Aluminiumoxyd-Keramik verbunden werden. Die beiden aufeinanderliegenden Flächen 4 und 5 der beiden unterschiedlichen Keramiken werden z.B. durch Schleifen paßgenau bearbeitet.

Als Verbindungsmaterial dient bezüglich der Korrosionsbeständigkeit und des Wärmeausdehnungsverhaltens angepaßtes Glas in Pulverform. Das Glaspulver 3 wird auf die zur Verbindung vorgesehenen Flächen 5 in der Weise aufgebracht, daß diese Flächen zunächst mit einer Haftflüssigkeit bedeckt werden. Eine bevorzugte Haftflüssigkeit besteht aus einer Kollodiumlösung die bei einem Ausführungsbeispiel etwa 5%ig war. Ein bevorzugtes Lösungsmittel war Amylacetat. Ein zweckmäßiges Aufbringverfahren, das auch gut maschinell durchführbar ist, besteht darin, den offenen Rand des β-Aluminiumoxydkeramikteils in eine stehende Kollodiumlösung einzutauchen.

Auf diese Haftflüssigkeit wird dann das gewünschte Glaspulver 3 aufgebracht. Dieses Aufbringen erfolgt zweckmäßig ebenfalls durch Tauchen in das Glaspulver oder durch Aufsprühen desselben.

Danach erfolgt zweckmäßig ein Trocknungsprozess z.B. bei etwa 80^{o}C. Besonders zweckmäßig ist es bei Luftanwesenheit einen Frittprozess bei etwa 400^{o}C bis 650^{o}C anzuschließen. Durch einen solchen Frittprozess wird erreicht, daß das Kollodium entfernt und das Glaspulver an der β-Aluminiumoxyd-Keramik fest gefrittet wird.

Danach wird dann das Keramikteil 2 auf das α-Aluminiumoxyd-Keramikteil 1 aufgesetzt und dieser Aufbau in einen Ofen eingebracht, in dem bei Temperaturen zwischen 500^{o}C und 1000^{o}C, insbesondere 600^{o}C bis 900^{o}C das angefrittete Glaspulver zum Schmelzen gebracht wird. Dadurch wird eine vakuumdichte, temperaturfeste und stoßfeste Anglasung geschaffen, die den Betriebsbedingungen einer Hochtemeraturbatterie stand hält.

Als Glas für das Verbindungsglaspulver hat sich besonders ein Schottglas 8245 der Fa. Schott, Mainz bewährt, das üblicherweise für Röntgenröhren verwendet wird. Das Anglasen im Ofen wird zweckmäßig in einer Schutzgasatmosphäre vorgenommen.

## Patentansprüche

1. Verfahren zum vakuumdichten Verbinden der Stirnfläche eines rohrförmigen Teiles aus einer β-Aluminiumoxyd-Keramik mit einer Auflagefläche eines ringförmigen Teiles aus einer α-Aluminiumoxyd-Keramik als Bauteile einer Hochtemperaturbatterie bei dem die beiden Keramikteile unter beifügen eines Verbindungsglases aufeinandergesetzt und durch Wärmezuführung und Schmelzen des Verbindungsglases miteinander verbunden werden, dadurch gekennzeichnet, daß die Verbindungsfläche des rohrförmigen β-Aluminiumoxyd-Keramikteiles mit einer ausheizbaren Haftflüssigkeit befeuchtet wird, daß dann die befeuchteten Flächen mit einem Glaspulver bedeckt werden, daß dann die Haftung der Glaspulver-Bedeckung durch eine oder mehrere Wärmebehandlungen an dem β-Aluminiumoxyd-Keramikteil erhöht wird und daß dann die Verbindung der beiden
Keramiken durch Schmelzen des Verbindungs-Glaspulvers vorgenommen wird.

2. Verfahren nach Anspruch 1, dadurch gekennzeichnet, daß das Glaspulver aus einem Glas besteht, dessen Wärmeausdehnungsverhalten weitgehend an das der zu verbindenden Keramiken angepaßt ist.

3. Verfahren nach Anspruch 2, dadurch gekennzeichnet, daß das Glaspulver aus Schottglas 8245 der Fa. Schott, Mainz besteht.

4. Verfahren nach einem der Ansprüche 1 bis 3, dadurch gekennzeichnet, daß als Haftflüssigkeit eine Kollodiumlösung verwendet wird.

5. Verfahren nach Anspruch 4, dadurch gekennzeichnet, daß die Kollodiumlösung 0,5%ig bis 10%ig, insbesondere 1%ig bis 6%ig ist.

6. Verfahren nach einem der Ansprüche 1 bis 5, dadurch gekennzeichnet, daß das Schmelzen des Glaspulvers in einem Ofen mit gesteuertem Durchlaufprofil vorgenommen wird.

7. Verfahren nach einem der Ansprüche 1 bis 6, dadurch gekennzeichnet, daß die Wärmebehandlungen der Glaspulverbedeckung einen Trocknungsvorgang umfassen.

8. Verfahren nach einem der Ansprüche 1 bis 7, dadurch gekennzeichnet, daß die Wärmebehandlungen der Glaspulverbedeckungen einen Frittvorgang umfassen.

9. Verfahren nach einem der Ansprüche 1 bis 8, dadurch gekennzeichnet, daß das Schmelzen in einer Schutzgasatmosphäre vorgenommen wird.

10. Verfahren nach einem der Ansprüche 1 bis 9, dadurch gekennzeichnet, daß ein Glaspulver mit einer Korngröße zwischen 25 m bis 500 m, vorzugsweise 50 m bis 250 m, insbesondere 75 m bis 175 m verwendet wird.

11. Verfahren nach Anspruch 4 oder 5, dadurch gekennzeichnet, daß als Lösungsmittel Amylacetat verwendet ist.

12. Verfahren nach einem der Ansprüche 1 bis 11, gekennzeichnet durch die Anwendung bei der Herstellung einer Hochtemperatur-Batterie nach Art einer Natrium-Nickel-Chlorid Batterie oder Natrium-Schwefel Batterie.
